# FASCICULE DE BREVET EUROPEEN

(11) **EP 4 469 698 B1**
(45) Date de publication et mention de la délivrance du brevet: **25.03.2026**
(21) Numéro de dépôt: 23706394.6
(22) Date de dépôt: 20.01.2023
(51) Int. Cl.: F16H 1/28, F16H 57/08

(54) **PORTE-SATELLITES POUR UN REDUCTEUR DE VITESSE DE TURBOMACHINE D'AERONEF**
PLANETENTRÄGER FÜR EIN UNTERSETZUNGSGETRIEBE EINER FLUGZEUGTURBOMASCHINE
PLANET CARRIER FOR A REDUCTION GEAR OF AN AIRCRAFT TURBOMACHINE

(30) Priorité: 27.01.2022 FR 2200689
(43) Date de publication de la demande: 04.12.2024
(73) Titulaire: Safran Transmission Systems, 92700 Colombes (FR)
(72) Inventeur: PIGOTT, Quentin Pierre Henri, 77550 MOISSY-CRAMAYEL (FR); MOULY, Guillaume Pierre, 77550 MOISSY-CRAMAYEL (FR)
(74) Mandataire: Gevers & Orès
(86) Numéro de dépôt international: PCT/FR2023/050082
(87) Numéro de publication internationale: WO 2023/144484

(56) Documents cités:
- FR-A1- 2 853 382
- FR-A1- 3 073 915

## Description

### Domaine technique de l'invention

La présente invention concerne un porte-satellites pour un réducteur de vitesse de turbomachine d'aéronef, ainsi qu'un réducteur de vitesse pour une turbomachine d'aéronef.

### Aval-plan technique

L'état de l'art comprend notamment les documents FR-A1-2 987 416, FR-A1-2 853 382, FR-A1-3 041 054, FR-A1-3 052 213, FR-A1-3 073 915, FR-A1-3 084 428.

Le rôle d'un réducteur mécanique est de modifier le rapport de vitesse et le couple entre l'axe d'entrée et l'axe de sortie d'un mécanisme.

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal de la turbomachine. Les satellites ont chacun un axe de révolution différent et sont équirépartis sur le même diamètre de fonctionnement autour de l'axe des planétaires. Ces axes sont parallèles à l'axe longitudinal de la turbomachine.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».
- sur un réducteur planétaire, le porte-satellites est fixe et la couronne constitue l'arbre de sortie du dispositif qui tourne dans le sens inverse du solaire.
- sur un réducteur épicycloïdal, la couronne est fixe et le porte-satellites constitue l'arbre de sortie du dispositif qui tourne dans le même sens que le solaire.
- sur un réducteur différentiel, aucun élément n'est fixé en rotation. La couronne tourne dans le sens contraire du solaire et du porte-satellites.

Les réducteurs peuvent être composés d'un ou plusieurs étages d'engrènement. Cet engrènement est assuré de différentes façons comme par contact, par friction ou encore par champ magnétique. Il existe plusieurs types d'engrènement par contact comme avec des dentures droites ou en chevron.

Le porte-satellites peut être monobloc ou se présenter sous la forme d'une cage et d'un porte-cage. La cage comprend une cavité interne dans laquelle sont logés le solaire, les satellites et les paliers de guidage de ces satellites. Le solaire comprend des cannelures internes d'accouplement à un premier arbre de la turbomachine et le porte-cage comprend une portion cylindrique comportant des cannelures externes d'accouplement à un autre arbre.

La liaison de la cage au porte-cage est en général rigide. En variante, on peut envisager une technologie dans laquelle la cage est reliée au porte-cage par des liaisons « souples », telles que décrites dans le document FR-A1-2 853 382. Dans un tel cas, le porte-cage comprend une rangée annulaire de doigts axiaux qui sont engagés dans des logements axiaux de la cage et qui sont reliés à des parois de ces logements par des éléments de liaison qui autorisent au moins un degré de liberté du doigt dans le logement. Il existe deux types de liaison souple pour cette application, la liaison à rotule et la liaison à pivot glissant.

Dans le cas d'une liaison souple à rotule, chaque doigt porte une rotule traversée par une broche cylindrique s'étendant dans le logement de la cage. La liaison souple est donc une liaison rotulante entre la cage et le porte-cage et plus particulièrement des doigts dans leurs logements.

Dans le cas d'une liaison souple à pivot glissant, chaque doigt est traversé par un pivot s'étendant dans le logement de la cage. La liaison souple est une liaison glissante entre la cage et le porte-cage et plus particulièrement des doigts dans leurs logements, dans des directions radiales par rapport à l'axe du réducteur.

En fonctionnement, lors de la mise sous couple du porte-satellites, les doigts vont fléchir et transmettre le couple à la cage. Les liaisons souples permettent de ne pas transmettre le fléchissement des doigts à la cage. Le porte-cage maintient la cage dans son plan de symétrie afin d'équilibrer la récupération des efforts de part et d'autre des satellites.

La présente invention s'intéresse plus particulièrement aux liaisons souples à pivot glissant entre une cage et un porte-cage. Dans la technique actuelle, le pivot comprend une surface externe parfaitement cylindrique qui coopère avec une surface interne parfaitement cylindrique d'un orifice du doigt et qui est apte à coulisser en direction radiale dans cet orifice. Ce coulissement est rendu possible par la présence d'un jeu faible mais maîtrisé entre les surfaces cylindriques du pivot et de l'orifice.

En fonctionnement, des efforts importants sont transmis via ces liaisons le long de l'axe de chaque pivot, ce qui génère des désalignements entre la cage et le porte-cage. Ces désalignements provoquent une élévation importante de la pression de contact entre les pivots et les surfaces internes des orifices, qui se concentre essentiellement au niveau d'une des extrémités de chaque pivot.

La présente invention propose un perfectionnement qui apporte une solution simple, efficace et économique à ce problème.

### Résumé de l'invention

L'invention concerne un porte-satellites pour un réducteur de vitesse de turbomachine, en particulier d'aéronef, ce réducteur ayant un axe principal et comportant :
- une cage comportant une cavité interne configurée pour recevoir un solaire centré sur ledit axe et des satellites disposés autour de l'axe et engrenés avec le solaire ainsi qu'avec une couronne destinée à entourer la cage, la cage comportant à sa périphérie des logements axiaux répartis autour dudit axe,
- un porte-cage comportant des doigts axiaux répartis autour de l'axe et engagés dans lesdits logements axiaux, et
- des éléments de liaison desdits doigts à des parois desdits logements, chacun de ces éléments de liaison comportant un pivot s'étendant dans une direction radiale par rapport audit axe, ce pivot étant porté par l'un des organes choisi parmi le doigt et au moins une des parois et étant apte à coulisser le long de cette direction radiale dans un orifice de l'autre de ces organes,
caractérisé en ce que :
- le pivot comprend une surface externe qui présente en section axiale une forme convexe, de préférence arrondie, et qui coopère avec une surface interne cylindrique dudit orifice, ou
- l'orifice comprend une surface interne qui présente en section axiale une forme convexe, de préférence arrondie, et qui coopère avec une surface externe cylindrique dudit pivot.

Les présente invention concerne donc deux configurations. Dans la première configuration, la surface externe de chacun des pivots est donc « bombée » et le sommet ou la crête de cette surface est le lieu privilégié d'appui sur la surface interne de l'orifice correspondant. Ceci permet de déplacer la zone d'application de la pression de contact depuis l'une des extrémités axiales du pivot jusqu'au niveau de ce sommet ou de cette crête et par exemple au milieu de la surface externe. La tâche de contact n'est pas localisée au niveau d'une extrémité du pivot, et elle ne risque pas d'être tronquée, ce qui pourrait générer une mauvaise répartition de la pression de contact et des concentrations de contraintes. La solution mise en place permet donc de limiter le niveau de pression de contact dans les liaisons à pivot glissant d'un porte-satellites susceptible d'être l'objet de désalignements entre sa cage et son porte-cage.

En variante, et selon la seconde configuration, c'est la surface interne de l'orifice qui est « bombée ». La fonction et les avantages de cette configuration sont les mêmes que ceux évoqués juste au-dessus.

La présente invention est compatible
- d'un réducteur à simple étage ou à plusieurs étages ;
- d'un réducteur planétaire, épicycloïdal ou différentiel ; et
- de dentures droites, hélicoïdales ou en chevron.
- de tout type de paliers pour les satellites, qu'ils soient du type à roulement, hydrodynamique, etc.

Le porte-satellites selon l'invention peut comprendre une ou plusieurs des caractéristiques suivantes, prises isolément les unes des autres, ou en combinaison les unes avec les autres :
- la surface externe du pivot ou la surface interne de l'orifice présente un rayon de courbure qui est supérieur à 100 fois une dimension axiale de cette surface ;
- la surface externe du pivot ou la surface interne de l'orifice présente un rayon de courbure qui est supérieur à 50 fois un diamètre moyen de cette surface ;
- ladite surface externe du pivot présente une dimension axiale qui est égale à une dimension axiale de ladite surface interne de l'orifice et/ou à une distance axiale d'engagement du pivot dans l'orifice ;
- le pivot est porté par la cage, et l'orifice est formé dans le doigt du porte-cage ;
- le doigt est intercalé entre deux parois du logement, le pivot traversant l'orifice du doigt et étant monté dans des trous de ces parois ;
- les trous des parois présentent des diamètres différents ;
- le pivot comprend au moins deux tronçons coaxiaux de diamètre différents, ladite surface externe étant située sur l'un de ces tronçons ;
- le pivot comprend trois tronçons adjacents ayant au moins pour certains des diamètres différents ;
- ladite surface externe est située sur un des tronçons de diamètre intermédiaire, qui est situé entre un tronçon de plus petit diamètre et un tronçon de plus grand diamètre.

La présente invention concerne également un réducteur mécanique pour une turbomachine d'aéronef, comportant un porte-satellites selon l'une des revendications précédentes, un solaire monté dans ladite cavité et centré sur ledit axe, une couronne s'étendant autour du solaire, et des satellites montés dans ladite cavité et engrenés avec le solaire et la couronne.

L'invention concerne en outre une turbomachine, en particulier d'aéronef, comportant un réducteur tel que décrit ci-dessus.

### Brève description des figures

D'autres caractéristiques et avantages ressortiront de la description qui suit d'un mode de réalisation non limitatif de l'invention en référence aux dessins annexés sur lesquels :
[Fig. 1] la figure 1 est une vue schématique en coupe axiale d'une turbomachine utilisant l'invention ;

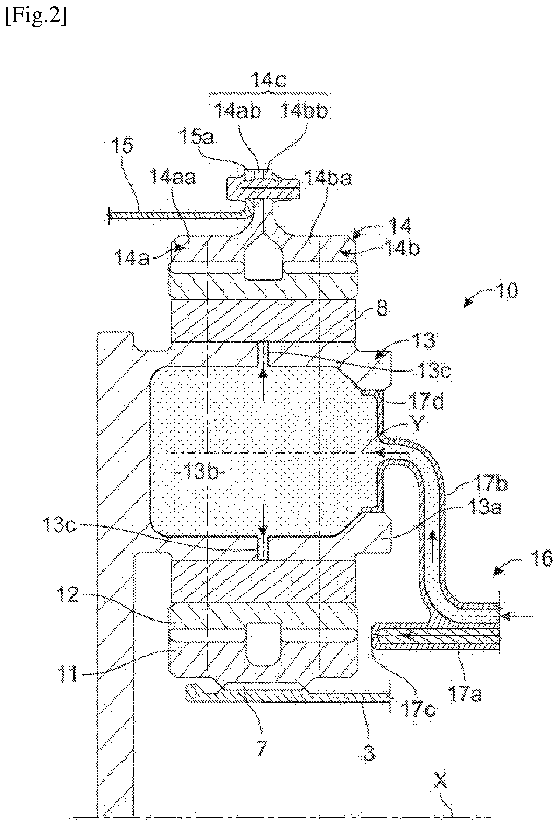

[Fig. 2] la figure 2 est une vue schématique en coupe axiale d'un réducteur à train épicycloïdal ;
[Fig. 3] la figure 3 est une vue en perspective d'une cage d'un porte-satellites de réducteur ;
[Fig. 4] la figure 4 est une vue en coupe axiale de la cage de la figure 3 et d'un porte-cage, la cage et le porte-cage formant un porte-satellites de réducteur et étant reliées par des liaisons souples à rotule ;
[Fig. 5] la figure 5 est une vue de détail de la figure 4 ;
[Fig. 6] la figure 6 est une vue en perspective éclatée d'un ensemble cage et porte-cage formant un porte-satellites de réducteur, la cage et le porte-cage étant reliées par des liaisons souples à pivot glissant ;
[Fig. 7] la figure 7 est une vue en coupe axiale et partielle d'une partie du porte-satellites de la figure 6 ;
[Fig. 8] la figure 8 est une vue de détail de la figure 7 ;
[Fig. 9] la figure 9 est une vue schématique à plus grande échelle d'un détail de la figure 7 et illustre la présente invention.

### Description détaillée de l'invention

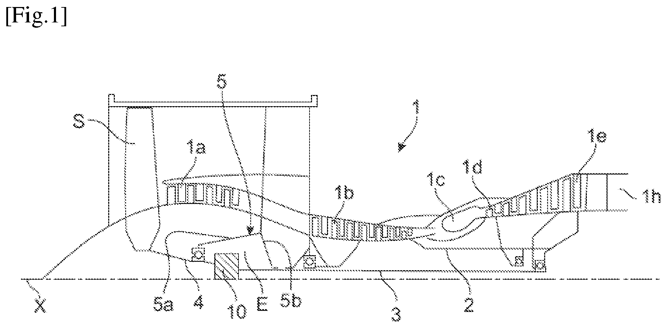

La figure 1 décrit une turbomachine 1 qui comporte, de manière classique, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est relié à l'arbre BP 3 au moyen d'un réducteur 10. Ce réducteur est généralement de type planétaire ou épicycloïdal.

Bien que la description qui suit concerne un réducteur du type planétaire ou épicycloïdal, elle s'applique également à un différentiel mécanique dans lequel ses trois composants essentiels, que sont le porte-satellites, la couronne et le solaire, sont mobiles en rotation, la vitesse de rotation de l'un de ces composants dépendant notamment de la différence de vitesses des deux autres composants.

Le réducteur 10 est positionné dans la partie amont de la turbomachine. Une structure fixe comportant schématiquement, ici, une partie amont 5a et une partie aval 5b qui compose le carter moteur ou stator 5 est agencée de manière à former une enceinte E entourant le réducteur 10. Cette enceinte E est ici fermée en amont par des joints au niveau d'un palier permettant la traversée de l'arbre de soufflante 4, et en aval par des joints au niveau de la traversée de l'arbre BP 3.

La figure 1 montre une partie d'un réducteur 10 qui peut prendre la forme de différentes architectures selon si certaines pièces sont fixes ou en rotation. En entrée, le réducteur 10 est relié à l'arbre BP 3, par exemple par l'intermédiaire de cannelures 7. Ainsi, l'arbre BP 3 entraîne un pignon planétaire appelé le solaire 11. Classiquement, le solaire 11 dont l'axe de rotation est confondu avec l'axe X de la turbomachine 1, entraîne une série de pignons appelés satellites 12, qui sont équirépartis sur le même diamètre autour de l'axe de rotation X. Ce diamètre est égal au double de l'entraxe de fonctionnement entre solaire 11 et satellites 12. Le nombre de satellites 12 est généralement défini entre trois et sept pour ce type d'application.

L'ensemble des satellites 12 est maintenus par un châssis appelé porte-satellites 12. Chaque satellite 12 tourne autour de son propre axe Y, et engrène avec la couronne 14.

En sortie du réducteur 10, nous avons :
o Dans une configuration épicycloïdale, l'ensemble des satellites 12 entraine en rotation le porte-satellite 13 autour de l'axe X de la turbomachine. La couronne 14 est fixée au carter moteur ou stator 5 via un porte-couronne 15 et le porte-satellites 12 est fixé à l'arbre de soufflante 4.
∘ Dans une configuration planétaire, l'ensemble des satellites 12 est maintenu par un porte-satellites 12 qui est fixé au carter moteur ou stator 5. Chaque satellite entraine la couronne qui est rapportée à l'arbre de soufflante 4 via un porte-couronne 15.

Chaque satellite 12 est monté libre en rotation à l'aide d'un palier 8, par exemple de type roulement ou palier hydrostatique. Chaque palier 8 est monté sur un des axes 13a du porte-satellites 12 et tous les axes sont positionnés les uns par rapport aux autres à l'aide d'un ou plusieurs châssis structurels du porte-satellites 12. Il existe un nombre d'axes et de paliers égal au nombre de satellites. Pour des raisons de fonctionnement, de montage, de fabrication, de contrôle, de réparation ou de rechange les axes 13a et le châssis peuvent être séparés en plusieurs pièces.

Pour les mêmes raisons citées précédemment, la denture d'un réducteur peut être séparée en plusieurs hélices. Dans notre exemple nous détaillons le fonctionnement d'un réducteur 10 à plusieurs hélices avec une couronne séparée en deux demi-couronnes:
o Une demi-couronne avant 14a constituée d'une jante 14aa et d'une demi-bride de fixation 14ab. Sur la jante 14aa se trouve l'hélice avant de la denture du réducteur. Cette hélice avant engrène avec celle du satellite 12 qui engrène avec celle du solaire 11.
o Une demi-couronne arrière 14b constituée d'une jante 14ba et d'une demi-bride de fixation 14bb. Sur la jante 14ba se trouve l'hélice arrière de la denture du réducteur. Cette hélice arrière engrène avec celle du satellite 12 qui engrène avec celle du solaire 11.

La demi-bride de fixation 14ab de la couronne avant 14a et la demi-bride de fixation 14bb de la couronne arrière 14b forment la bride de fixation 14c de la couronne. La couronne 14 est fixée au porte-couronne 15 en assemblant la bride de fixation 14c de la couronne et la bride de fixation 15a du porte-couronne à l'aide d'un montage boulonné par exemple. Dans ce qui suit, une demi-bride pourra être appelée une bride.

Les flèches de la figure 1 décrivent l'acheminement d'huile dans le réducteur 10. L'huile arrive dans le réducteur 10 depuis la partie stator 5 dans le distributeur 16 par différents moyens qui ne seront pas précisés dans cette vue car ils sont spécifiques à un ou plusieurs types d'architecture. Le distributeur 16 est séparé en deux parties en général chacune répétée du même nombre de satellites. Les injecteurs 17a ont pour fonction de lubrifier les dentures, et les bras 17b ont pour fonction de lubrifier les paliers 8. L'huile est amenée vers l'injecteur 17a pour ressortir par l'extrémité 17c afin de lubrifier les dentures. L'huile est également amenée vers chaque bras 17b et circule via la bouche d'alimentation 17d du palier 8. L'huile circule ensuite à travers l'axe 13a dans une ou des zones tampons 13b pour ensuite ressortir par des orifices 13c afin de lubrifier les paliers 8 des satellites.

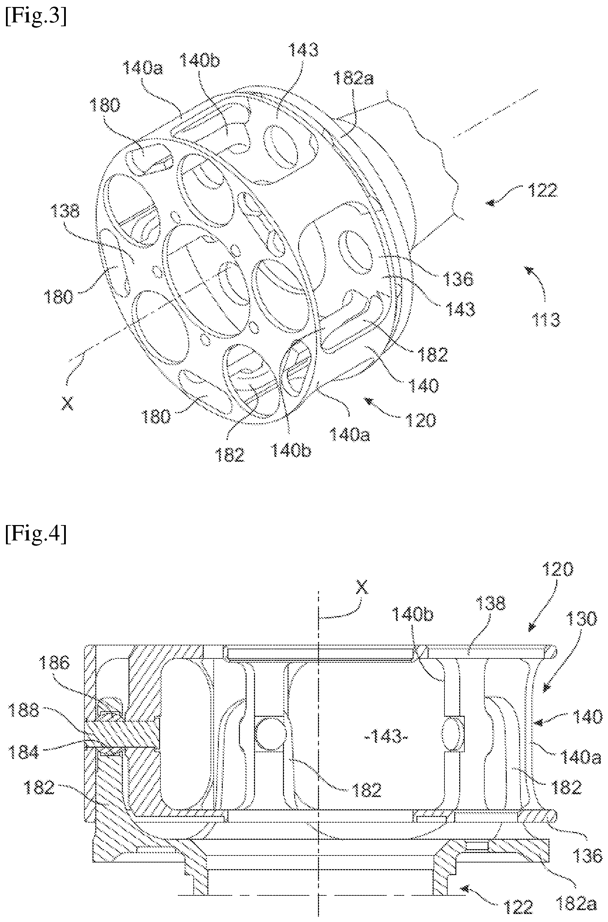

Dans les figures 3 à 5, les éléments déjà décrits dans ce qui précède sont désignés par les mêmes références augmentés d'une centaine.

Les figures 3 à 5 représentent une technologie particulière de porte-satellites 113, ce porte-satellites comportant une cage 120 et un porte-cage 122 reliés par des liaisons « souples » à rotules.

La cage 120 comprend deux parois annulaires radiales 136, 138 qui sont parallèles entre elles et perpendiculaires à l'axe X, ainsi qu'une paroi cylindrique 140 qui s'étend entre les périphéries externes de ces parois 136, 138.

La paroi cylindrique 140 est ici du type à double peau et comprend une peau externe 140a interrompue par les lumières 143 et une peau interne 140b interrompue par les mêmes lumières 143. La peau externe 140a séparée par cinq lumières 143 forme cinq pontets extérieurs et la peau interne 140b séparée par cinq lumières 143 forme cinq pontets intérieurs. Chaque couple de pontets inférieur et supérieur forme une chape pour accueillir le doigt 182 du porte-cage 122. Autrement dit, les pontets de chaque couple définissent entre eux un logement 180 de réception d'un doigt 182 du porte-cage 122. Les pontets assurent la liaison structurelle entre les parois 136 et 138. Des lumières 180 de forme oblongue sont réalisées dans au moins une des parois 136 et 138 de telle sorte à laisser passer le doigt 182 entre les pontets intérieur et extérieur.

La cage 120 comprend ainsi une rangée annulaire de logements 180. Ces logements 180 reçoivent les doigts axiaux 182 solidaires d'une paroi annulaire 182a sensiblement radiale du porte-cage 122. La paroi 182a est située à une extrémité axiale du porte-cage 122. Les doigts 182 s'étendent axialement depuis la paroi 182a et sont engagés par translation axiale dans les logements 180.

Chaque doigt 182 comprend, sensiblement en son milieu, une bague 184 de montage de la rotule 186 destinée à être traversé par une broche cylindrique 188 portée par la cage 120.

La bague 184 a une orientation sensiblement radiale par rapport à l'axe X. Il a une forme générale cylindrique. La cage 120 et la rotule 186 ont une épaisseur, mesurée dans une direction radiale par rapport à l'axe X, qui est inférieure à la distance inter-pontets ou l'épaisseur radiale de la lumière oblongue 180, de façon à pouvoir être engagées dans ce logement concomitamment avec le doigt 182 de support de ces pièces.

Chaque logement 180 est traversé par une broche 188 qui a une orientation sensiblement radiale par rapport à l'axe X. Chaque broche 188 comporte un corps cylindrique 188a relié à une extrémité axiale, ici radialement interne, à une collerette annulaire externe 188b. La broche 188 est ici engagée par translation radiale depuis l'intérieur à travers des orifices radiaux des pontets, sa collerette 188b étant destinée à venir en appui radial sur une face plane 191 du pontet extérieur de la cage 120. Après insertion de la broche 188 dans les orifices des pontets, jusqu'à mise en appui de la collerette 188b sur le pontet extérieur, la collerette 188b est fixée à ce pontet par exemple par vissage.

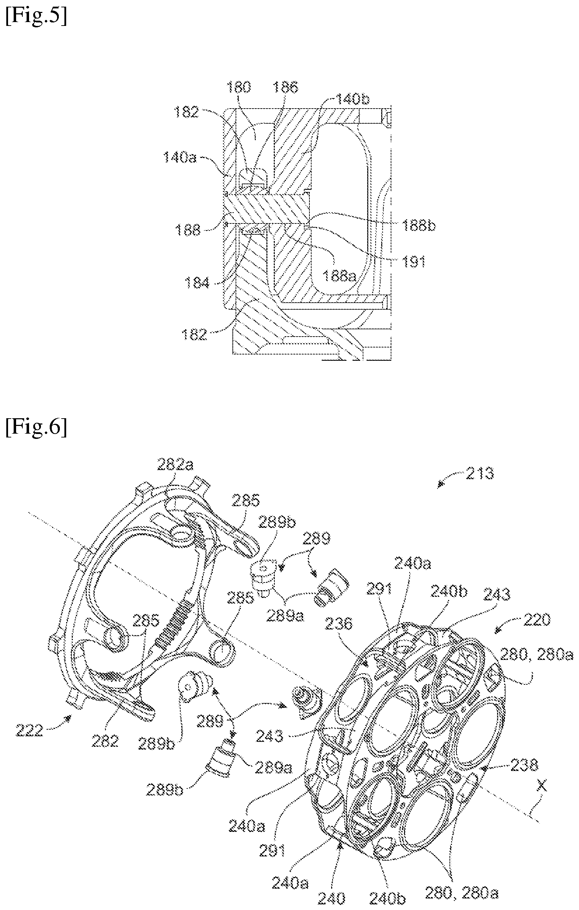

Dans les figures 6 à 9, les éléments déjà décrits dans ce qui précède sont désignés par les mêmes références augmentés d'une autre centaine.

Les figures 6 à 9 représentent une technologie particulière de porte-satellites 213, ce porte-satellites comportant une cage 220 et un porte-cage 222 reliés par des liaisons « souples » à pivot glissant.

La cage 220 comprend deux parois annulaires radiales 236, 238 qui sont parallèles entre elles et perpendiculaires à l'axe X, ainsi qu'une paroi cylindrique 240 qui s'étend entre les périphéries externes de ces parois 236, 238. Les parois 236, 238, 240 définissent entre elles une cavité de réception du solaire et des satellites du réducteur.

La paroi cylindrique 240 est ici du type à double peau et comprend une peau externe 240a interrompue par les lumières 243 et une peau interne 240b interrompue par les mêmes lumières 243. La peau externe 240a séparée par cinq lumières 243 forme cinq pontets extérieurs et la peau interne 240b séparée par cinq lumières 243 forme cinq pontets intérieurs.

Les lumières 243 sont destinées à être traversées par les satellites logés dans la cavité du porte-satellites, afin de permettre leur engrènement avec la couronne du réducteur.

Chaque couple de pontets inférieur et supérieur forme une chape pour accueillir le doigt 282 du porte-cage 222. Autrement dit, les pontets de chaque couple définissent entre eux un logement 280 de réception d'un doigt 282 du porte-cage 222. Les pontets assurent la liaison structurelle entre les parois 236 et 238. Des lumières 280a de forme oblongue sont réalisées dans au moins une des parois 236 et 238 de telle sorte à laisser passer le doigt 282 entre les pontets intérieur et extérieur.

La cage 220 comprend ainsi une rangée annulaire de logements 280. Ces logements 280 reçoivent les doigts axiaux 282 solidaires d'une paroi annulaire 282a sensiblement radiale du porte-cage 222. La paroi 282a est située à une extrémité axiale du porte-cage 222. Les doigts 282 s'étendent axialement depuis la paroi 282a et sont engagés par translation axiale dans les logements 280.

Chaque doigt 282 comprend un orifice 285 destiné à être traversé par un pivot 289 porté par la cage 220.

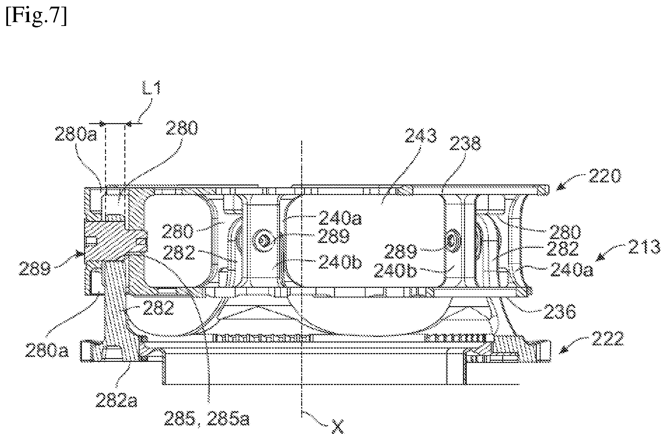

Chaque orifice 285 a une orientation sensiblement radiale par rapport à l'axe X et comprend une surface interne 285a qui est cylindrique. L'axe principal de l'orifice 285 est noté A et est donc orienté radialement par rapport à l'axe X. Le doigt 282 a une épaisseur, mesurée le long de cet axe A, qui est inférieure à la distance inter-pontets ou l'épaisseur radiale de la lumière oblongue 280a, de façon à pouvoir être engagé dans ce logement 280. L'orifice 285 et sa surface 285a ont une longueur L1 mesurée le long de cet axe A (cf. figure 7).

Chaque logement 280 est traversé par un pivot 289 qui a une orientation radiale par rapport à l'axe X et qui s'étend le long d'un axe A. Chaque pivot 289 comporte un corps 289a relié à une extrémité axiale, ici radialement externe, à une collerette annulaire externe 289b. Le pivot 289 est ici engagé par translation radiale depuis l'extérieur à travers des trous radiaux 290, 292 des pontets, sa collerette 289b étant destinée à venir en appui radial sur une face plane 291 du pontet extérieur de la cage 220. Après insertion du pivot 289 dans les trous 290, 292 des pontets, jusqu'à mise en appui de la collerette 289b sur le pontet extérieur, la collerette 289b est fixée à ce pontet par exemple par vissage.

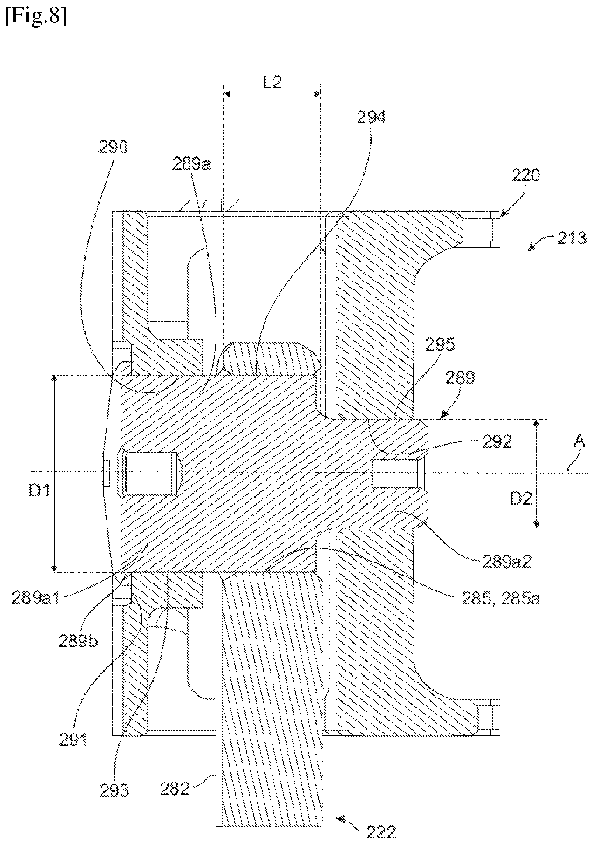

Le trou 290 du pontet extérieur a un diamètre D1 et le trou 292 du pontet intérieur a un diamètre D2 qui est inférieur à D1 (cf. figure 8).

Le pivot 289, et en particulier son corps 289a, comprend deux tronçons adjacents 289a1, 289a2 de diamètres différents. Le tronçon 289a2 de plus petit diamètre est engagé dans le trou 292 et a donc un diamètre égal ou proche de D2. Le tronçon 289a1 de plus grand diamètre est situé entre la collerette 289b et le tronçon 289a2, et comprend deux parties. Une première partie du tronçon 289a1 située du côté de la collerette 289b est engagée dans le trou 290 et a donc un diamètre égal ou proche de D1. Une seconde partie du tronçon 289a1 située du côté du tronçon 289a1, et plus particulièrement entre la première partie du tronçon 289a1 et ce tronçon 289a2, est engagée dans l'orifice 285 du doigt 282.

En variante, on pourrait considérer que le pivot 289, et en particulier son corps 289a, comprend trois tronçons adjacents, le tronçon 289a1 formant en fait deux tronçons où sont situées les surfaces externes 293 et 294. Le tronçon comportant la surface 293 peut avoir un diamètre supérieur au tronçon comportant la surface 294. La surface 293 est alors située sur le tronçon de diamètre intermédiaire, qui est situé entre le tronçon 289a2 de plus petit diamètre et le tronçon avec la surface 293 de plus grand diamètre.

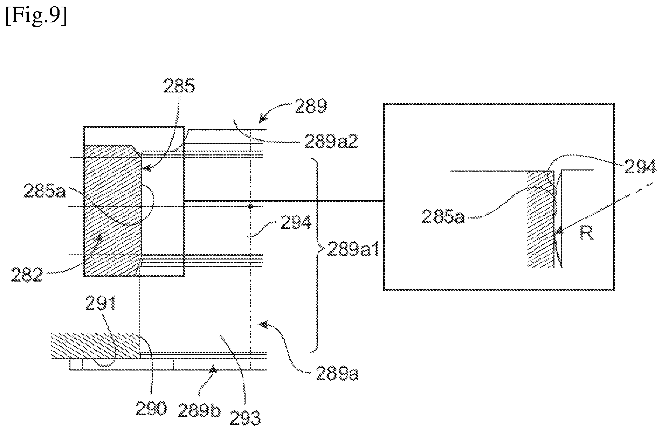

Les surfaces externes 293, 295 du tronçon 289a2 et de la première partie du tronçon 289a1 sont cylindriques. Au contraire, la surface externe 294 de la seconde partie du tronçon 289a1 présente en section axiale une forme convexe, de préférence arrondie (cf. la vue agrandie de droite de la figure 9). D'autres formes convexes sont envisageables, par exemple du type elliptique, logarithmique, etc.

La surface externe 294 a une longueur ou dimension axiale L2 mesurée le long de l'axe A. Dans l'exemple représenté, la distance axiale d'engagement du pivot 289 dans l'orifice 285 est sensiblement égale à L2 qui est sensiblement égale à L1.

La surface externe 294 a avantageusement un rayon de courbure R relativement important de façon à avoir des surfaces de contact entre le pivot 289 et le doigt 282 qui soient les plus grandes possibles, tout en répartissant de manière maitrisée les pressions d'appui sur ces surfaces de contact. Ce rayon de courbure R est mesuré dans un plan passant par l'axe A.

De préférence, la surface externe 294 a un rayon de courbure R qui est supérieur à 100 fois une dimension axiale L2 de cette surface.

En variante ou en caractéristique additionnelle, la surface externe 294 a un rayon de courbure R qui est supérieur à 50 fois un diamètre moyen D1 de cette surface.

Dans une variante non représentée de l'invention, les pivots 289 pourraient être portés par le porte-cage 222 au lieu d'être porté par la cage 220. Les doigts 282 traversés par ces pivots 289 seraient alors portés par la cage 220 et non plus par le porte-cage 222 comme dans le cas précité. C'est alors le porte-cage 222 qui comprendrait les logements 280 de réception de ces doigts 282.

Dans encore une autre variante non représentée, la surface « bombée » serait la surface interne 285a de l'orifice 285 (à la place de la surface externe du pivot) et la surface externe 294 du pivot 289 serait alors cylindrique.

## Revendications

1. Porte-satellites (213) pour un réducteur de vitesse (10) de turbomachine (1), en particulier d'aéronef, le porte-satellites (213) comportant :
- une cage (220) comportant une cavité interne configurée pour recevoir un solaire (11) centré sur un axe (X) et des satellites (12) disposés autour de l'axe (X) et engrenés avec le solaire (11) ainsi qu'avec une couronne (14) destinée à entourer la cage (220), la cage (220) comportant à sa périphérie des logements axiaux (280) répartis autour dudit axe (X),
- un porte-cage (222) comportant des doigts axiaux (282) répartis autour de l'axe (X) et engagés dans lesdits logements axiaux (280), et
- des éléments de liaison desdits doigts (282) à des parois desdits logements (280), chacun de ces éléments de liaison comportant un pivot (289) s'étendant dans une direction radiale (A) par rapport audit axe (X), ce pivot (289) étant porté par l'un des organes choisi parmi le doigt (282) et au moins une des parois et étant apte à coulisser le long de cette direction radiale (A) dans un orifice (285) de l'autre de ces organes,
**caractérisé en ce que** :
- le pivot (289) comprend une surface externe (294) qui présente en section axiale une forme convexe, de préférence arrondie, et qui coopère avec une surface interne cylindrique (285a) dudit orifice (285), ou
- l'orifice (285) comprend une surface interne (285a) qui présente en section axiale une forme convexe, de préférence arrondie, et qui coopère avec une surface externe (294) cylindrique dudit pivot (289).

2. Porte-satellites (213) selon la revendication 1, dans lequel la surface externe (294) du pivot (289) ou la surface interne (285a) de l'orifice (285) présente un rayon de courbure qui est supérieur à 100 fois une dimension axiale (L2) de cette surface (294, 285a).

3. Porte-satellites (213) selon la revendication 1 ou 2, dans lequel la surface externe (294) du pivot (289) ou la surface interne (285a) de l'orifice (285) présente un rayon de courbure qui est supérieur à 50 fois un diamètre moyen (D1) de cette surface (294, 285a).

4. Porte-satellites (213) selon l'une des revendications précédentes, dans lequel ladite surface externe (294) du pivot (289) présente une dimension axiale (L2) qui est égale à une dimension axiale (L1) de ladite surface interne (285a) de l'orifice (285) et/ou à une distance axiale d'engagement du pivot (289) dans l'orifice (285).

5. Porte-satellites (213) selon l'une des revendications précédentes, dans lequel le pivot (289) est porté par la cage (220), et l'orifice (285) est formé dans le doigt (282) du porte-cage (222).

6. Porte-satellites (213) selon la revendication précédente, dans lequel le doigt (282) est intercalé entre deux parois du logement (280), le pivot (289) traversant l'orifice (285) du doigt (282) et étant monté dans des trous (290, 292) de ces parois.

7. Porte-satellites (213) selon la revendication précédente, dans lequel les trous (290, 292) des parois présentent des diamètres différents.

8. Porte-satellites (213) selon l'une des revendications précédentes, dans lequel le pivot (289) comprend au moins deux tronçons (289a1, 289a2) coaxiaux de diamètre différents, ladite surface externe (294) étant située sur l'un de ces tronçons (289a1).

9. Porte-satellites (213) selon l'une des revendications précédentes, dans lequel le pivot (289) comprend trois tronçons adjacents ayant au moins pour certains des diamètres différents.

10. Porte-satellites (213) selon l'une des revendications précédentes, dans lequel ladite surface externe (294) est située sur un des tronçons de diamètre intermédiaire, qui est situé entre un tronçon de plus petit diamètre et un tronçon de plus grand diamètre.

11. Réducteur mécanique (210) pour une turbomachine (1) d'aéronef, comportant un porte-satellites (213) selon l'une des revendications précédentes, un solaire (11) monté dans ladite cavité et centré sur ledit axe (X), une couronne (14) s'étendant autour du solaire (11), et des satellites (12) montés dans ladite cavité et engrenés avec le solaire (11) et la couronne (14).

12. Turbomachine (1), en particulier d'aéronef, comportant un réducteur (210) selon la revendication précédente.

## Patentansprüche

1. Satellitenträger (213) für ein Untersetzungsgetriebe (10) eines Turbotriebwerks (1), insbesondere eines Luftfahrzeugs, wobei der Satellitenträger (213) beinhaltet:
- einen Käfig (220), der einen Innenhohlraum beinhaltet, der konfiguriert ist, um ein Sonnenrad (11), das auf einer Achse (X) zentriert ist, und Satellitenräder (12) aufzunehmen, die um die Achse (X) herum angeordnet sind und mit dem Sonnenrad (11) sowie mit einem Kranz (14) in Eingriff stehen, der dazu bestimmt ist, den Käfig (220) zu umgeben, wobei der Käfig (220) an seiner Peripherie axiale Gehäuse (280) beinhaltet, die um die Achse (X) herum verteilt sind,
- einen Käfigträger (222), der axiale Finger (282) beinhaltet, die um die Achse (X) herum verteilt sind und in die axialen Gehäuse (280) eingreifen, und
- Verbindungselemente der Finger (282) an Wänden der Gehäuse (280), wobei jedes dieser Verbindungselemente einen Drehzapfen (289) beinhaltet, der sich in einer radialen Richtung (A) in Bezug auf die Achse (X) erstreckt, wobei dieser Drehzapfen (289) von einem der Organe getragen wird, das aus dem Finger (282) und mindestens einer der Wände ausgewählt ist, und imstande ist, entlang dieser radialen Richtung (A) in einer Öffnung (285) des anderen dieser Organe zu gleiten, **dadurch gekennzeichnet, dass**:
- der Drehzapfen (289) eine Außenoberfläche (294) umfasst, die im axialen Schnitt eine konvexe, vorzugsweise abgerundete Form aufweist und die mit einer zylindrischen Innenoberfläche (285a) der Öffnung (285) zusammenwirkt, oder
- die Öffnung (285) eine Innenoberfläche (285a) umfasst, die im axialen Schnitt eine konvexe, vorzugsweise abgerundete Form aufweist und die mit einer zylindrischen Außenoberfläche (294) des Drehzapfens (289) zusammenwirkt.

2. Satellitenträger (213) nach Anspruch 1, wobei die Außenoberfläche (294) des Drehzapfens (289) oder die Innenoberfläche (285a) der Öffnung (285) einen Krümmungsradius aufweist, der größer als das 100-fache einer axialen Abmessung (L2) dieser Oberfläche (294, 285a) ist.

3. Satellitenträger (213) nach Anspruch 1 oder 2, wobei die Außenoberfläche (294) des Drehzapfens (289) oder die Innenoberfläche (285a) der Öffnung (285) einen Krümmungsradius aufweist, der größer ist als das 50-fache eines mittleren Durchmessers (D1) dieser Oberfläche (294, 285a).

4. Satellitenträger (213) nach einem der vorstehenden Ansprüche, wobei die Außenoberfläche (294) des Drehzapfens (289) eine axiale Abmessung (L2) aufweist, die gleich einer axialen Abmessung (L1) der Innenoberfläche (285a) der Öffnung (285) und/oder einem axialen Eingriffsabstand des Drehzapfens (289) in die Öffnung (285) ist.

5. Satellitenträger (213) nach einem der vorstehenden Ansprüche, wobei der Drehzapfen (289) vom Käfig (220) getragen wird und die Öffnung (285) im Finger (282) des Käfigträgers (222) gebildet ist.

6. Satellitenträger (213) nach dem vorstehenden Anspruch, wobei der Finger (282) zwischen zwei Wänden des Gehäuses (280) eingelegt ist, wobei der Drehzapfen (289) die Öffnung (285) des Fingers (282) durchquert und in Löchern (290, 292) dieser Wände montiert ist.

7. Satellitenträger (213) nach dem vorstehenden Anspruch, wobei die Löcher (290, 292) der Wände unterschiedliche Durchmesser aufweisen.

8. Satellitenträger (213) nach einem der vorstehenden Ansprüche, wobei der Drehzapfen (289) mindestens zwei koaxiale Abschnitte (289a1, 289a2) mit unterschiedlichem Durchmesser umfasst, wobei sich die Außenoberfläche (294) auf einem dieser Abschnitte (289a1) befindet.

9. Satellitenträger (213) nach einem der vorstehenden Ansprüche, wobei der Drehzapfen (289) drei angrenzende Abschnitte umfasst, von denen mindestens einige unterschiedliche Durchmesser aufweisen.

10. Satellitenträger (213) nach einem der vorstehenden Ansprüche, wobei sich die Außenoberfläche (294) auf einem der Abschnitte mit mittlerem Durchmesser befindet, der sich zwischen einem Abschnitt mit kleinerem Durchmesser und einem Abschnitt mit größerem Durchmesser befindet.

11. Mechanisches Untersetzungsgetriebe (210) für ein Turbotriebwerk (1) eines Luftfahrzeugs, das einen Satellitenträger (213) nach einem der vorstehenden Ansprüche, ein in dem Hohlraum montiertes und auf der Achse (X) zentriertes Sonnenrad (11), einen Kranz (14), der sich um das Sonnenrad (11) herum erstreckt, und Satellitenräder (12), die in dem Hohlraum montiert sind und mit dem Sonnenrad (11) und dem Kranz (14) in Eingriff stehen, beinhaltet.

12. Turbotriebwerk (1), insbesondere eines Luftfahrzeugs, das ein Untersetzungsgetriebe (210) nach dem vorstehenden Anspruch beinhaltet.

## Claims

1. A planet carrier (213) for a reduction gear (10) of a turbomachine (1), particularly an aircraft turbomachine, the planet carrier (213) comprising:
- a carrier frame (220) comprising an internal cavity configured to receive a sun gear (11) centred on an axis (X) and planet gears (12) arranged around the axis (X) and meshing with the sun gear (11) as well as with a ring gear (14) intended to surround the carrier frame (220), the carrier frame (220) comprising at its periphery axial housings (280) distributed around said axis (X),
- a carrier frame carrier (222) comprising axial fingers (282) distributed around the axis (X) and engaged in said axial housings (280), and
- connecting elements connecting said fingers (282) to walls of said housings (280), each of these connecting elements comprising a pivot (289) extending in a radial direction (A) with respect to said axis (X), this pivot (289) being carried by one of the members chosen from the finger (282) and at least one of the walls and being capable of sliding along this radial direction (A) in an orifice (285) of the other of these members,
**characterised in that**:
- the pivot (289) comprises an external surface (294) which has a convex shape in axial section, preferably rounded, and which cooperates with a cylindrical internal surface (285a) of said orifice (285), or
- the orifice (285) comprises an internal surface (285a) which has a convex shape in axial section, preferably rounded, and which cooperates with a cylindrical external surface (294) of said pivot (289).

2. The planet carrier (213) as claimed in claim 1, wherein the external surface (294) of the pivot (289) or the internal surface (285a) of the orifice (285) has a radius of curvature which is greater than 100 times an axial dimension (L2) of this surface (294, 285a).

3. The planet carrier (213) according to claim 1 or 2, wherein the external surface (294) of the pivot (289) or the internal surface (285a) of the orifice (285) has a radius of curvature which is greater than 50 times an average diameter (D1) of this surface (294, 285a).

4. The planet carrier (213) according to one of the preceding claims, wherein said external surface (294) of the pivot (289) has an axial dimension (L2) which is equal to an axial dimension (L1) of said internal surface (285a) of the orifice (285) and/or to an axial distance of engagement of the pivot (289) in the orifice (285).

5. The planet carrier (213) according to one of the preceding claims, wherein the pivot (289) is carried by the carrier frame (220), and the orifice (285) is formed in the finger (282) of the carrier frame holder (222).

6. The planet carrier (213) according to the preceding claim, wherein the finger (282) is inserted between two walls of the housing (280), the pivot (289) passing through the orifice (285) of the finger (282) and being mounted in holes (290, 292) in these walls.

7. The planet carrier (213) according to the preceding claim, wherein the holes (290, 292) in the walls have different diameters.

8. The planet carrier (213) according to one of the preceding claims, wherein the pivot (289) comprises at least two coaxial segments (289a1, 289a2) of different diameters, said external surface (294) being located on one of these segments (289a1).

9. The planet carrier (213) according to one of the preceding claims, wherein the pivot (289) comprises three adjacent segments, at least some of which have different diameters.

10. The planet carrier (213) according to one of the preceding claims, wherein said external surface (294) is located on one of the intermediate diameter segments, which is located between a smaller diameter segment and a larger diameter segment.

11. A mechanical reduction gear (210) for an aircraft turbomachine (1), comprising a planet carrier (213) according to one of the preceding claims, a sun gear (11) mounted in said cavity and centred on said axis (X), a ring gear (14) extending around the sun gear (11), and planet gears (12) mounted in said cavity and meshed with the sun gear (11) and the ring gear (14).

12. A turbomachine (1), in particular of an aircraft, comprising a reduction gear (210) according to the preceding claim.
